# FASCICULE DE BREVET EUROPEEN

(11) **EP 0 562 913 B1**
(45) Date de publication et mention de la délivrance du brevet: **08.10.1997**
(21) Numéro de dépôt: 93400666.9
(22) Date de dépôt: 16.03.1993
(51) Int. Cl.: B01J 8/00, B01J 8/04

(54) **Enceinte contenant plusieurs lits de matière solide séparés et déchargeable par gravité sans mélange de matière**
Gefäss mit mehreren getrennten Betten von Feststoffen mit Schwerkraftentleerung ohne mischen des Materials
Vessel containing several separated beds of solid material dischargeable by gravity without mixing of material

(30) Priorité: 25.03.1992 FR 9203696
(43) Date de publication de la demande: 29.09.1993
(73) Titulaire: INSTITUT FRANCAIS DU PETROLE, 92502 Rueil-Malmaison (FR)
(72) Inventeur: Poussin, Bernard, F-78420 Carrières sur Seine (FR); Lepage, Jean-Paul, F-92500 Rueil Malmaison (FR); Huin, Roland, F-78360 Montesson la Borde (FR)

(56) Documents cités:
- FR-A- 1 366 401
- FR-A- 2 607 569
- GB-A- 864 991
- US-A- 2 292 716
- US-A- 2 485 316
- US-A- 2 766 002
- US-A- 4 642 223
- PATENT ABSTRACTS OF JAPAN vol. 12, no. 237 (C-509)6 Juillet 1988
- Perry's Chemical Engineers' Handbook, Edition 6 (1984), Pages 20-67, 20-71 et 20-72.

## Description

L'invention concerne une enceinte contenant plusieurs lits séparés de matière solide pouvant être déchargés par gravité sans mélange de matière.

Cette enceinte est un réacteur.

Le problème se rencontre notamment sur des réacteurs d'hydrotraitement de fractions pétrolières, contenant plusieurs lits catalytiques séparés et superposés, chaque lit contenant un catalyseur soutenu par un plateau support. Les plateaux support assurent la séparation entre les lits. La matière solide est chargée à partir d'une ouverture dans la partie haute de l'enceinte.

Les catalyseurs ne se retrouvent pas dans le même état après fonctionnement, le problème au déchargement est d'éviter leur mélange, ce qui se produirait inévitablement si tous les lits étaient déchargés par le bas simultanément.

Ce problème se pose évidemment aussi lorsque les lits sont chargés avec des catalyseurs différents.

Dans le brevet US 4,642,223 au moins une tubulure est montée sur chaque plateau support. Les tubulures du plateau support le plus haut (correspondant au lit le plus proche de l'ouverture haute de l'enceinte) sont munies de paniers amovibles (par une poignée pouvant être tirée vers le haut après que le lit supérieur ait été déchargé) s'appuyant sur le bord supérieur de la tubulure et assurant la continuité du plateau support.
Ces paniers permettent alors le déchargement du lit supérieur par aspiration à partir de l'ouverture haute du réacteur.
Les tubulures des lits inférieurs ne doivent alors pas comporter de paniers de façon à ce que le déchargement des lits inférieurs soit effectué par écoulement gravitaire de tous les lits simultanément.
Le problème posé reste ainsi entièrement à résoudre.

Un brevet US 2,292,716 préconise l'emploi d'un plateau tournant composé de deux demi-sections circulaires solidaires sur leur diamètre commun d'une poutre centrale autour de laquelle elles pivotent. Chaque section du plateau portant le lit catalytique est en appui sur au moins un barreau rétractable monté dans une ouverture aménagée dans la paroi du réacteur et rétractable à partir de l'extérieur du réacteur.
La rétraction du (des) barreau(x) permet le déchargement brusque du catalyseur. Il s'agit en fait d'une chute sur le plateau inférieur. Dans les installations actuelles, où les lits ont des hauteurs de 5-7 m fréquemment, il apparaît que cette chute peut provoquer des chocs, vibrations et ruptures du plateau inférieur et même de la structure du réacteur.
De plus, outre les problèmes d'étanchéité non résolus, il apparaît clairement que de tels plateaux sont incapables d'assurer la résistance mécanique nécessaire pour supporter des lits faisant couramment 30 à 40 tonnes.

La demanderesse, dans un premier objectif, a donc recherché une solution adaptable aux unités industrielles actuelles et permettant le déchargement contrôlé sans endommagement mécanique et séparément de lits de matière solide.

Un autre but de la demanderesse est d'éviter le déchargement par aspiration. En effet, dans la méthode par aspiration, on adapte une manche souple au niveau du lit le plus haut et on aspire son catalyseur, puis si l'on veut également décharger le lit inférieur par aspiration, on adapte la manche sur le lit en-dessous et ainsi de suite. Pour régler la vitesse d'aspiration, la présence de l'homme est nécessaire dans le réacteur. Or, lorsque le catalyseur n'est pas régénéré, cette intervention est conduite sous atmosphère d'azote, ce qui nécessite des moyens importants pour garantir la sécurité de l'opérateur.

De plus, l'apiration casse le catalyseur, ce qui nécessite un apport de catalyseur supplémentaire (10-15%) et pénalise les coûts d'exploitation.

La demanderesse propose donc une enceinte adaptée aux capacités actuelles, permettant l'emploi de lits de matière différente, et munie de moyens permettant un déchargement gravitaire des lits séparément, sans avoir nécessairement besoin d'une intervention humaine dans l'enceinte même.

Plus précisément, l'objet de l'invention est un réacteur catalytique vertical ou incliné, fonctionnant sous haute pression, comprenant au moins deux lits de matière solide différente, successifs et séparés, la matière solide de chaque lit étant soutenue par un plateau support, muni d'au moins une tubulure reliant les lits successifs, ledit réacteur comportant également au moins une ouverture dans sa partie haute pour le chargement des lits et au moins une ouverture dans sa partie basse pour le déchargement de matière, solide, caractérisé en ce que au moins une tubulure de chaque plateau support est munie de moyen d'obturation relié à un moyen mécanique de commande à distance de son ouverture, ladite tubulure ayant son extrêmité supérieure au niveau le plus bas du lit supérieur.

L'invention sera mieux comprise en se référant à la description des figures.

La figure 1 représente une enceinte verticale selon l'invention.

Les figures 2 à 9 représentent des modes de réalisation différents de moyen d'obturation de la tubulure, associé à un moyen de commande.

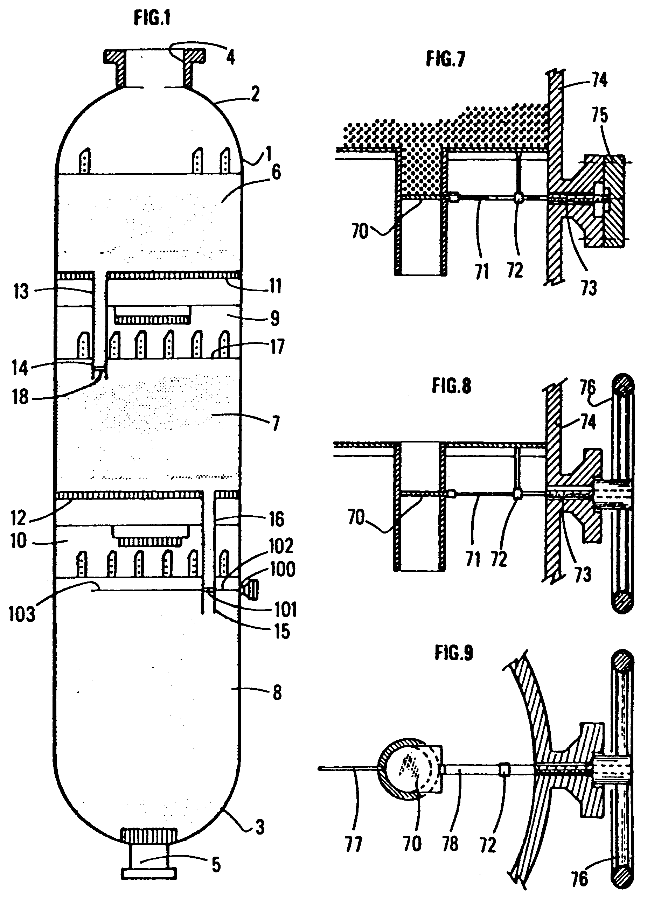

L'enceinte 1 représentée figure 1 est un cylindre à axe vertical fermé par un toit 2 et un fond 3. Une enceinte d'axe incliné peut tout aussi bien convenir, pourvu que la matière solide puisse s'écouler gravitairement.

La matière solide des lits est chargée par une ouverture 4 aménagée dans le toit 2 (qui peut avoir d'autres usages) et la matière solide du lit le plus bas est déchargée par une ouverture 5 aménagée dans la partie basse du réacteur.

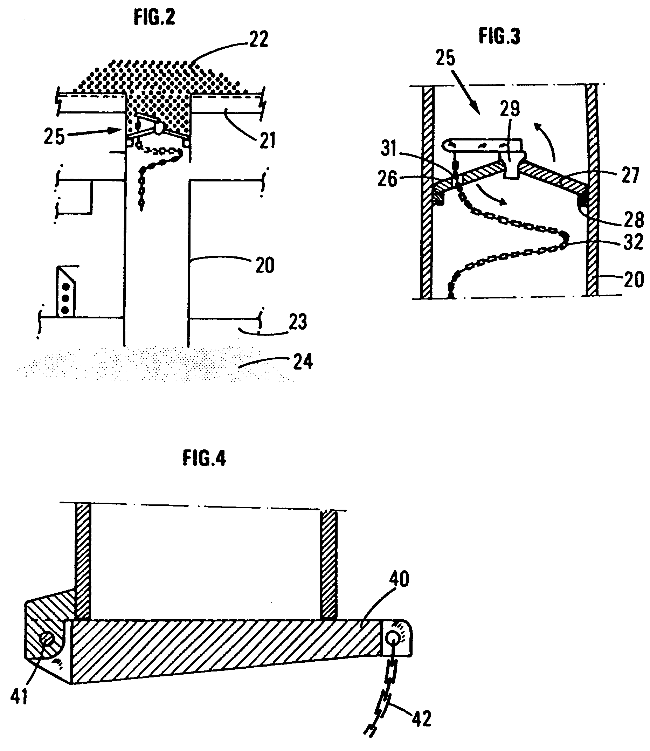

L'enceinte comporte au moins 2 lits contenant une matière solide. On a représenté sur la figure 2, 3 lits 6, 7, 8 consécutifs, superposés et séparés par un interlit référencé respectivement 9, 10.

La matière solide de chaque lit repose sur un plateau support 11, 12, le dernier lit pouvant reposer directement sur le fond.

Selon l'invention, on dispose entre 2 lits successifs, par exemple 6 et 7, au moins une tubulure 13 reliant les lits entre eux.

La tubulure 13 doit avoir son extrémité supérieure au niveau le plus bas du lit supérieur 6, de façon à ce que le maximum de matière du lit 6 s'écoule par la tubulure ouverte.

Ainsi, cette extrémité arrive, sur la figure 1, au niveau du plateau support 11 du lit 6.

Avantageusement, les plateaux support présentent une forme légèrement conique, la tubulure étant placée sur la pointe du cône dirigée vers le bas, de façon à éviter la rétention de matière sur la plaque.

La tubulure peut être soudée, ou assemblée par tout autre moyen au plateau support. De préférence, elle comporte une couronne qui vient en appui sur le plateau, ce mode de réalisation facilite le démontage.

L'extrémité inférieure 14 de tubulure 13 atteint le lit inférieur 7 et peut même le pénétrer en partie, ainsi que montré pour l'extrémité 15 de la tubulure 16 dans le 8. La tubulure traverse si nécessaire les dispositifs internes 17.

Pour éviter le mélange de matière entre les lits, lorsque l'enceinte est en fonctionnement ou au déchargement, la tubulure est munie d'au moins un moyen d'obturation 18 relié à un moyen pour la commande à distance de son ouverture.

Le moyen d'obturation doit assurer la fermeture de la tubulure lorsque l'enceinte est chargée, il doit s'ouvrir sous l'action du moyen de commande à distance pour la décharge.

Les figures 2 à 9 montrent des modes de réalisation différents des moyens d'obturation et de commande.

La figure 2 montre une tubulure 20 reliant le plateau support 21 d'un lit 22 à un lit 24.

Le moyen d'obturation 25 est constitué (fig. 3) d'au moins deux plaques référencées 26, 27, déposées à l'intérieur de la tubulure symétriquement par rapport à son axe (D). Les plaques sont en appui par leur extrémité basse sur des supports 28 et par leur extrémité haute sur une pièce 29 disposée sur l'axe (D) et formant clef de voûte.

Il est bien certain que la forme des plaques s'adapte à celle de la paroi intérieure de la tubulure.

Une telle structure "en voûte" s'arc-boute sur les parois internes de la tubulure sous l'effet de la charge de matière du lit supérieur 22.

Le moyen pour la commande à distance de l'ouverture moyen d'obturation 25 est ici constitué de façon avantageuse par une chaîne 32.

Cette chaîne est solidarisée à la pièce 29 et possède une extrémité libre à l'extrémité basse (qui, de préférence, passe par l'ouverture aménagée dans le fond de l'enceinte), la chaîne est solidarisée à un bras 30 (formant levier) monté sur la pièce 29, et la chaîne passe par un évidemment 31 aménagé dans au moins une plaque, ici 26.

On peut également exercer la traction par le haut du réacteur.

La figure 4 représente un autre mode de réalisation dans lequel le moyen d'obturation est constitué par une plaque basculante 40 ayant un axe de rotation horizontal 41.

En position obturation, la plaque est maintenue en position sous la tubulure par une goupille cisaillable traversant l'axe 41 (empêché alors dans sa rotation) qui est cassée sous l'effet de la traction sur la chaîne 42. La plaque bascule alors en position verticale pour libérer l'ouverture de la tubulure.

Tout autre moyen pour verrouiller la plaque en position obturation peut convenir lorsque le déverrouillage peut être obtenu à partir de l'action du moyen de commande.

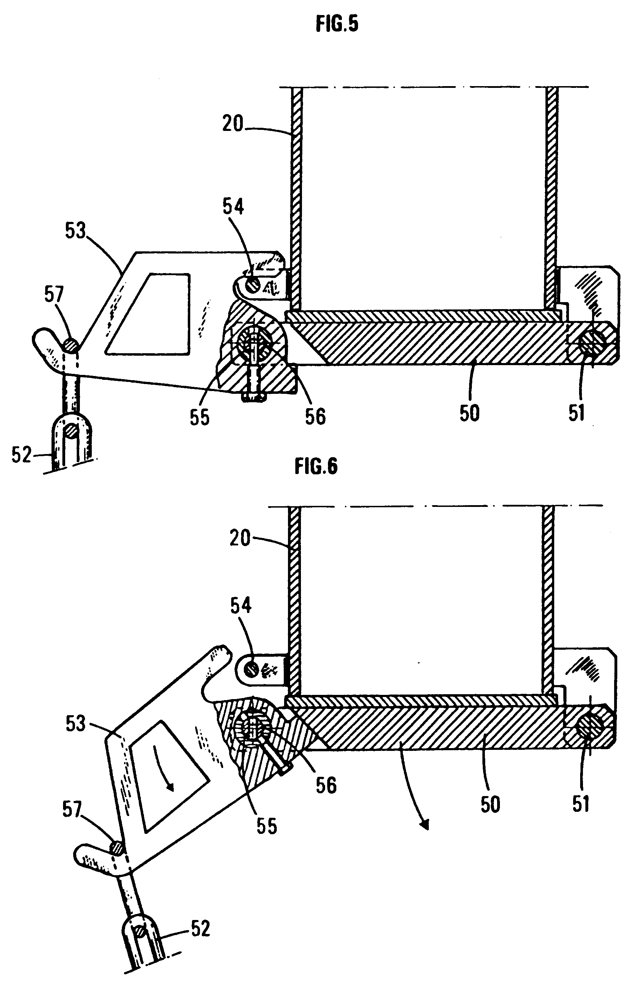

La variante montrée figure 5 comporte également une plaque 50 basculante autour d'un axe horizontal 51 sous l'effet d'une traction exercée sur une chaîne 52.

Plus précisément, l'extrémité de la plaque opposée à l'axe 51 est munie d'une pièce 53 formant levier.

Lorsque la plaque 50 est en position obturation, le levier 53 est en appui sur un support 54 et la position est verrouillée par une goupille cisaillable 55 placé sur l'axe 56 de rotation du levier, cet axe étant porté par la plaque 50.

La chaîne 52 constituant ici le moyen de commande à distance, est fixée au levier 53 (point de fixation 57).

Sous l'effet de la traction exercée sur la chaîne 52, la goupille 55 casse, le levier 53 peut alors tourner autour de l'axe 56 en se dégageant du support 54 (fig. 6). La plaque avec le levier basculent alors.

L'avantage supplémentaire d'utiliser une chaîne est de pourvoir "ringarder" la tubulure (la nettoyer grâce aux mouvements de la chaîne). Pour cela, on fixe de manière amovible la chaîne au point 57 et on aménage dans le moyen d'obturation un évidement pour le passage de la chaîne. Ceci au niveau de chaque tubulure, la chaîne traversant toutes les tubulures. Celles-ci présentent alors avantageusement le même axe (D).

La figure 7 présente un mode de réalisation avec une plaque 70 qui est déplacée latéralement par une tige 71 accessible de l'extérieur de l'enceinte. La plaque 70 peut être située à n'importe quel niveau dans la tubulure. Elle est fixée à une tige 71 (pouvant être maintenue dans l'enceinte par un supportage 72), qui sort de l'enceinte par un piquage 73 monté sur la paroi 74.

En position obturation, une bride 75 assure l'étanchéité sur le piquage et la tige.

Pour écarter la plaque 70, on ôte la bride 75 et dispose (fig. 8) un moyen 76 pour tirer la tige à partir de l'extérieur (tire-fort...).

De façon avantageuse (fig. 9), on utilise le piquage pour mettre en place au moins un thermocouple 77 glissé dans un tube 78 dans lequel passe également la tige 71. On a ainsi une mesure de température dans l'enceinte, et mieux au niveau de chaque lit.

Une telle réalisation est montée sur la tubulure 16 de la figure 1, avec un piquage 100, une plaque 101, un tube 102 d'où sort le thermocouple 103.

Ainsi lorsque l'enceinte est en fonctionnement, les lits de matière solide demeurant séparés : il n'y a pas de transfert de matière sous l'effet du tassement du lit inférieur.

Au déchargement, il suffit alors de décharger l'ouverture 5 en partant du lit le plus bas et lit par lit.

Le lit 8 déchargé, les tubulures supérieures étant fermées. Puis, par action du moyen de commande à distance (donc de l'extérieur de l'enceinte), la tubulure supérieure (ici 16) est ouverte, la matière solide du lit 7 s'écoule alors et est récupérée. Il suffit alors d'ouvrir la tubulure 13 pour que la matière du lit 6 se déverse sur le plateau inférieur 12, puis par la tubulure 16 dans le fond 3 et l'ouverture 5.

L'invention exposée dans la présente demande, outre la résolution des problèmes posés, s'avère également particulièrement intéressante lorsque au moins deux lits contiennent des matières solides différentes. Un autre avantage est de pouvoir utiliser les tubulures pour le chargement des lits.

De plus, l'invention convient tout à fait pour des procédés nécessitant des hautes pressions (au moins 50 bars) puisqu'elle permet soit de ne pas aménager de nouvelles ouvertures dans l'appareil de haute pression soit d'utiliser les ouvertures existantes.

On note également qu'elle évite le cokage du catalyseur qui aurait pu être présent dans la tubulure en l'absence du moyen d'obturation, présence résultant du tassement du lit inférieur.

## Revendications

1. Réacteur catalytique vertical ou incliné, fonctionnant sous haute pression, comprenant au moins deux lits de matière solide différente, successifs et séparés, la matière solide de chaque lit étant soutenue par un plateau support, muni d'au moins une tubulure reliant les lits successifs, ledit réacteur comportant également au moins une ouverture dans sa partie haute pour le chargement des lits et au moins une ouverture dans sa partie basse pour le déchargement de matière solide, caractérisé en ce que au moins une tubulure de chaque plateau support est munie de moyen d'obturation relié à un moyen mécanique de commande à distance de son ouverture, ladite tubulure ayant son extrêmité supérieure au niveau le plus bas du lit supérieur.

2. Réacteur selon la revendication précédente, caractérisé en ce que le moyen d'obturation est constitué par deux plaques disposées à l'intérieur de la tubulure symétriquement par rapport à l'axe de la tubulure, lesdites plaques étant en appui d'une part sur la paroi interne de la tubulure, et d'autre part sur une pièce formant clef de voûte, la dite pièce étant reliée au moyen de commande à distance, de façon à ce que ledit moyen étant actionné, ladite pièce se dégage des plaques qui écartent pour libérer l'ouverture de la tubulure.

3. Réacteur selon l'une des revendications 1 ou 2, caractérisé en ce que le moyen d'obturation est constitué par une plaque basculant autour d'un axe horizontal par action du moyen de commande à distance.

4. Réacteur selon la revendication 3, caractérisé en ce que la plaque est munie d'une pièce formant levier, montée sur un axe horizontal porté par la plaque, un moyen de verrouillage empêchant la rotation du levier autour de cet axe lorsque la plaque est en position obturation, le déverrouillage étant obtenu par action du moyen de commande à distance, porté par le levier, le levier basculant alors autour de son axe et entraînant la plaque.

5. Réacteur selon l'une des revendications précédentes, caractérisé en ce que le moyen de commande à distance est constitué par une chaîne solidarisée au moyen d'obturation, qui passe par l'ouverture basse de l'enceinte, et qui est tirée de l'extérieur pour libérer l'ouverture de la tubulure.

6. Réacteur selon la revendication 5 caractérisé en ce qu'une seule chaîne relie toutes les tubulures.

7. Réacteur selon l'une des revendications 1 ou 2, caractérisé en ce que le moyen d'obturation est constitué par une plaque déplaçable latéralement par une tige reliée à ladite plaque et traversant la paroi du réacteur.

8. Réacteur selon la revendication 7, caractérisé en ce que la tige est disposée dans un tube dans lequel passe également un thermocouple.

## Claims

1. A vertical or inclined reactor working under high pressure, comprising at least two successive separate beds of different solid material, the solid material of each bed being supported by a support plate provided with at least one pipe connecting the successive beds, said reactor also comprising at least one opening in its upper portion for the loading of beds and at least one opening in its lower portion for the discharge of solid material, characterised in that at least one pipe of each support plate is provided with closure means connected to means for remote control of opening thereof, said pipe having its upper end reaching the lowest level of the upper bed.

2. A reactor according to the preceding claim characterised in that the closure means is formed by two plate members disposed in the interior of the pipe symmetrically with respect to the axis of the pipe, said plate members being supported on one hand on the internal wall of the pipe and on the other hand on a portion forming a keystone member, said portion being connected to the remote control means so that, said means being actuated, said portion is released from the plate members which move apart to free the opening of the pipe.

3. A reactor according to one of claims 1 to 2 characterised in that the closure means is formed by a plate member which pivots about a horizontal axis by the action of the remote control means.

4. A reactor according to claim 3 characterised in that the plate member is provided with a portion forming a lever which is mounted on a horizontal axis carried by the plate member, a locking means preventing rotary movement of the lever about said axis when the plate member is in the closure position, unlocking being effected by actuation of the remote control means, carried by the lever, the lever then pivoting about its axis and entraining the plate member.

5. A reactor according to one of the preceding claims characterised in that the remote control means is formed by a chain which is fixed to the closure means and which passes through the lower opening of the vessel and which is pulled from the exterior to free the opening of the pipe.

6. A reactor according to claim 5 characterised in that a single chain connects all the pipes.

7. A reactor according to one of claims 1 to 2 characterised in that the closure means is formed by a plate member which is displaceable laterally by a bar connected to said plate member and passing through the wall of the reactor.

8. A reactor according to claims 7 characterised in that the bar is disposed in a tube into which a thermocouple also passes.

## Patentansprüche

1. Vertikaler oder geneigter, unter hohem Druck arbeitender katalytischer Reaktor mit wenigstens zwei aufeinanderfolgenden und getrennten Betten aus unterschiedlichem festem Material, wobei das feste Material jedes Betts durch eine Trägerplatte unterstützt ist, mit wenigstens einer die aufeinanderfolgenden Betten verbindenden Rohrleitung, wobei der Reaktor ferner wenigstens eine Öffnung in seinem oberen Bereich zum Eingeben der Betten und wenigstens eine Öffnung in seinem unteren Bereich zum Ausgeben von festem Material aufweist, dadurch gekennzeichnet, daß wenigstens eine Rohrleitung jeder Trägerplatte mit einer Verschlußeinrichtung versehen ist, die mit einer mechanischen Einrichtung zum Fernsteuern ihrer Öffnung verbunden ist, wobei die Rohrleitung ihr oberes Ende am niedrigsten Niveau des oberen Betts hat.

2. Reaktor nach dem vorhergehenden Anspruch, dadurch gekennzeichnet, daß die Verschlußeinrichtung durch zwei im Inneren der Rohrleitung symmetrisch zur Achse der Rohrleitung angeordnete Platten gebildet ist, wobei die Platten einerseits auf die Innenwand der Rohrleitung und andererseits auf ein einen Schlußstein bildendes Teil drücken, wobei besagtes Teil mit der Fernsteuereinrichtung so verbunden ist, daß wenn die Einrichtung betätigt wird, das Teil sich von den Platten trennt, die sich auseinander bewegen, um die Öffnung der Rohrleitung freizugeben.

3. Reaktor nach einem der Ansprüche 1 oder 2, dadurch gekennzeichnet, daß die Verschlußeinrichtung durch eine durch Einwirkung der Fernsteuereinrichtung um eine horizontale Achse schwenkende Platte gebildet ist.

4. Reaktor nach Anspruch 3, dadurch gekennzeichnet, daß die Platte mit einem einen Hebel bildenden Teil versehen ist, das an einer horizontalen, von der Platte getragenen Achse montiert ist, wobei eine Verriegelungseinrichtung die Drehung des Hebels um diese Achse verhindert, wenn die Platte in Schließposition ist, und die Entriegelung durch Wirkung der vom Hebel getragenen Fernsteuereinrichtung erzielt wird, woraufhin der Hebel um seine Achse schwenkt und die Platte mitnimmt.

5. Reaktor nach einem der vorhergehenden Ansprüche, dadurch gekennzeichnet, daß die Fernsteuereinrichtung durch eine mit der Verschlußeinrichtung verbundene Kette gebildet ist, die durch die untere Öffnung des Behälters verläuft und die von außen gezogen wird, um die Öffnung der Rohrleitung freizugeben.

6. Reaktor nach Anspruch 5, dadurch gekennzeichnet, daß eine einzige Kette alle Rohrleitungen verbindet.

7. Reaktor nach einem der Ansprüche 1 oder 2, dadurch gekennzeichnet, daß die Verschlußeinrichtung durch eine Platte gebildet ist, die seitlich durch eine mit der Platte verbundene und die Wand des Reaktors durchquerende Stange verschiebbar ist.

8. Reaktor nach Anspruch 7, dadurch gekennzeichnet, daß die Stange in einem Rohr angeordnet ist, in dem auch ein Thermoelement verläuft.
